Europäisches Patentamt

(19) European Patent Office

Office européen des brevets

(11) Publication number: **0 003 146**

A2

(12) **EUROPEAN PATENT APPLICATION**

(21) Application number: **79200008.5**

(22) Date of filing: **05.01.79**

(51) Int. Cl.²: **B 01 D 17/02**
C 02 C 1/38, B 01 D 21/00

(30) Priority: **06.01.78 NL 7800180**

(43) Date of publication of application:
**25.07.79 Bulletin 79/15**

(84) Designated contracting states:
**BE CH DE FR GB IT LU NL SE**

(71) Applicant: **Ballast-Nedam Groep N.V.**
**Laan van Kronenburg 2**
**NL-1180 BE Amstelveen(NL)**

(84) Designated contracting states:
**BE CH DE FR GB IT LU NL SE**

(71) Applicant: **Skimovex B.V.**
**Industriegebied De Liesbosch**
**NL-3500 GA Utrecht(NL)**

(84) Designated contracting states:
**BE CH DE FR GB IT LU NL SE**

(72) Inventor: **Middelbeek, Cornelis Gerardus**
**Gooland 12**
**NL-2631 CP Nootdorp(NL)**

(72) Inventor: **Lindenbergh, Hans**
**Miggelenbergweg 43**
**NL-7351 BN Hoenderloo(NL)**

(74) Representative: **Konings, Lucien Marie Cornelis**
**Joseph et al,**
**Sweelinckplein 1**
**NL-2517 GK Den Haag(NL)**

(54) **A device for treating waste water by gravitational segregation.**

(57) A device for treating waste water, wherein by gravitational segregation the waste water is separated from the water-insoluble substances contained therein, such as oil, comprises a stream trajectory, which accomodates a feeding chamber communicating with lower ends of separation channels. Therein the substance guide means extend transversely of the stream trajectory below the channels.

Since the overall flow space of the plate separator is passed in one and the same upward direction and because it is ensured that the flow rate in alle separation channels is substantially the same, a satisfactory gravitational segratation is obtained owing to the comparatively low, uniform flow rate in alle separation channels.

FIG.1

0003146

see front pageTITLE MODIFIED
see front page

-1-

# A device for treating waste water

The invention relates to a device for treating waste water, wherein by gravitational segregation the waste water is separated from the water-insoluble substances contained therein, such as oil, comprising a reservoir having a mixture inlet, a water outlet and at least one outlet for separated substances separated from the water outlet, which reservoir accommodates at least one stream trajectory including a plate separator having a plurality of parallel, sequential, flat separation channels bounded by separation plates and a feeding chamber communicating with lower ends of the separation channels and an outlet chamber communicating with top ends of the separation channels, whilst substance guide means joining the separation plates project transversely of the stream trajectory below the channels and increase the flow resistance in the direction of disposition of the channels the more so the nearer they are disposed to a feeding chamber.

Such a device is known from US patent 367,308. In the known device the stream trajectory in the plate separator has a zigzag shape. For this purpose the stream trajectory is formed by a sequence of trajectory sections directed parallel to one another and alternately extending upwards and downwards and having a successively larger overall passage towards sucessively narrower separation channels. Although it is thus endeavoured to improve the separation by decreasing the flow rate in the last trajectory section, the flow rate in all trajectory sections and even in the last one is high.

The invention provides a device of improved separation capacity and/or of smaller dimensions, since all separation channels communicate with their lower ends with one and the same inlet chamber, since all separation channels conduct mixture only in upward direction, since all separation channels have substantially equal passages and since the substance guide means and the angle between the separation plates on the one hand and a guide wall on the other hand are proportioned so that the quantity of flow in all separation channels is substantially the same. Since the overall flow space of the plate separator is passed in one and the same upward direction and because it is ensured that the flow rate in all separation channels is substantially the same, a satisfactory gravitational segregation is obtained owing to the comparatively low, uniform flow rate in all separation channels.

The aforesaid and further features of the invention will be explained more fully hereinafter with reference to examples.

The drawing schematically shows in:

Figure 1 a longitudinal sectional view of a preferred embodiment of a device in accordance with the invention, and

Figure 2 a perspective view of detail II of Figure 1.

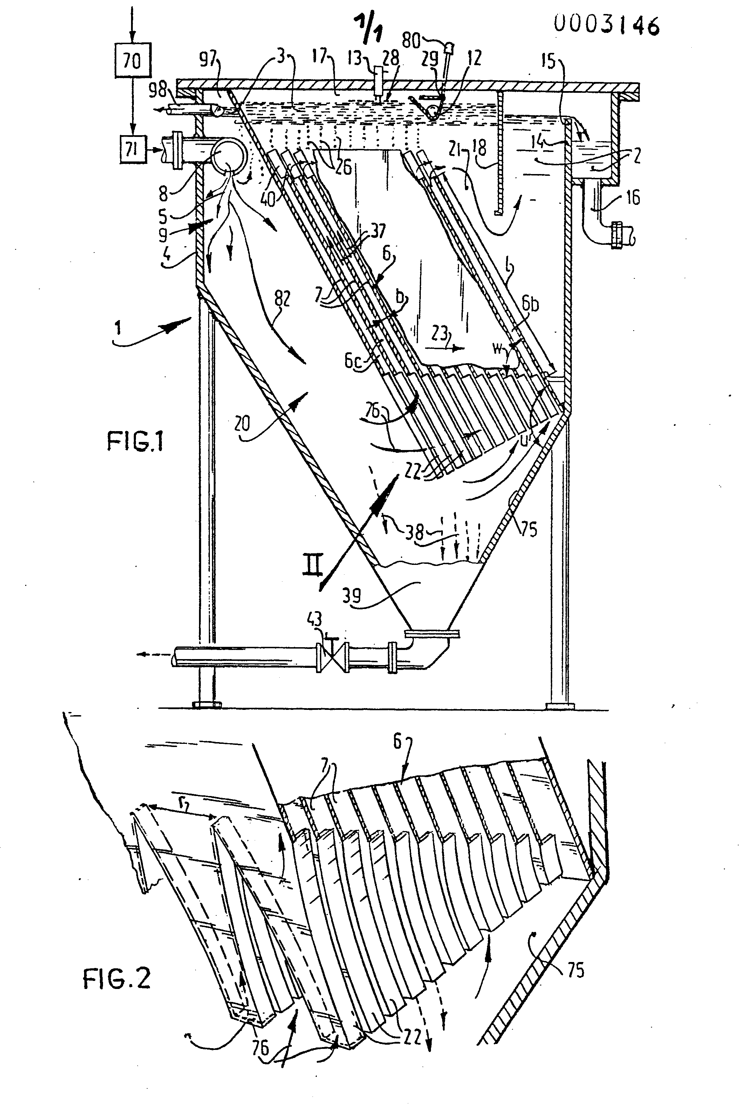

The device 1 shown in Figures 1 and 2 for separating water 2 and water-insoluble, light substances 3 contained therein, for example, oil comprises a reservoir 4 for receiving a mixture 5 of water 2 and substances 3 and a plurality of sequential, parallel, sloping separation channels 6 arranged in the reservoir 4 and bounded by channel walls 7, an inlet chamber 9, a mixture inlet 8 opening out in the inlet chamber 9 and distributing the mixture at right angles to the plane of the drawing, a feeding chamber 20 communicating with the inlet chamber 9, a substance outlet 12, a layer-limit sensor 13, an overflow 14 with an overflow rim 15, a water outlet 16 communicating with the overflow 14 and a screen 18 separating the overflow 14 from a collecting space 17 for light substances 3. The assembly of separation channels 6 is arranged between the feeding chamber 20 and an outlet chamber 21 of the reservoir 4.

The mixture flows through a dosing member 70, in which flocculation promoting chemicals are added to the mixture 5 and through a mixer 71 towards the mixture inlet 8. The desired flocculation takes place in the feeding chamber 20.

In order to ensure that all separation channels 6 pass substantially equal quantities, the mixture 5 is passed towards the separation channels 6 through substance guide means 22, which evenly distribute the mixture 5 among the separation channels 6. As shown in Figures 1 and 2 the substance guiding means 22 are formed by gutters, which increase the flow resistance, viewed in the direction of disposition of the channels 6, the higher the nearer they are to the feeding chamber 20. Figure 1 shows that the foremost substance guiding means 22 are the longest and that they are shorter the further they are disposed to the rear in the direction 23. The chosen design of the substance guiding means 22 prevents the foremost channels 6 from passing proportionally more mixture 5.

The inlet chamber 9 and the feeding chamber 20 are operating as pre-separators, since herein light substances 3 rise up into a collecting space 97, from which they are removed through a tap 98 and since herein heavy substances 38 settle down in a collecting space 39. The mixture 5 passes in the direction of the arrow 37 through the separation channels

0003146

6 at such a low rate that the light substance 3 and the heavy substances 38 drift towards the lower side and the top side respectively of the channel walls 7, along which they rise and fall respectively. The top ends of the channel walls 7 are provided with finger- and gutter-shaped substance guide means 40, which guide the light substances 3 towards the collecting space 17, whereas the lower ends of the channel walls 7 are provided with said substance guide means 22 for conducting the heavy substances 38 towards the collecting space 39. The substance guide means 40 and 22 leave free adequate space for passing water 2 and mixture 5 respectively.

In the device 1 of Figure 1 a mixture 5 of water 2 and substances 3 is guided in the direction of the arrow 37 through the plurality of separation channels 6 at such a low flow rate that under the action of gravity the substances 3 are urged to the lower sides of the channel walls 7, along which they are moved on in the direction of the arrow 37. The substances 3 are subsequently assembled via the substance guide means 40 into narrow streams, which reach the outlet chamber 21, in which they rise like rising droplet streams 26 into the collecting space 17.

When the layer-limit sensor 13 indicates that substance 3 is present at the level 28, the substance outlet 12 is turned about an axis 29, for example, by means of a manually operated lever 80 for conducting away the substances 3.

The purified water 2 flows via the overflow 14 towards the water outlet 16.

The heavy substances 38 are conducted away by opening a closing member 43 of the collecting space 39.

As shown in Figure 1 the (foremost) substance guide means 22 disposed nearest the feeding chamber 20 have the greater length. As an alternative, the foremost substance guide means 22 may have the same length as the further means but a larger width. Preferably the foremost substance guide means 22 are both longer and broader than the substance guide means 22 following the former. The reservoir 4 comprises a guide wall 75, which is at an obtuse angle $u$ of, for example,

120$^{O}$ to the hindmost separation channels 6b. Therefore, the mixture 5 flows more readily in the hindmost separation channels 6 than in the foremost separation channels 6c. The mixture 5 flows in the feeding chamber 20 in the direction of the arrow 82 opposite the direction of flow 37 in the separation channels 6. The deflection required thereto indicated by arrows 76 impedes the inflow into the foremost separation channels 6c, which is an additional safeguard against an excessive quantity of flow in the channels 6c.

The device 1 preferably has the form illustrated in Figure 1 with the associated ratios between the passages of separation channels 6, feeding chamber 20 and outlet chamber 21. The length l of the separation channels 6 is, for example, 180 cms and their width b is 5 cms., whilst twenty channels are disposed at the angle of inclination w of 60$^{O}$. The foremost substance guide means 22 has a length of 22 cms and the hindmost a length of 10 cms. The width r of the substance guide means 22 gradually decreases in downward direction, for example, in the manner illustrated in Figure 1.

-1-  0003146

CLAIM

A device for treating waste water, wherein by gravitational segregation the waste water is separated from the water-insoluble substances contained therein, such as oil, comprising a reservoir having a mixture inlet, a water outlet and at least one outlet for separated substances separated from the water outlet, which reservoir accommodates at least one stream trajectory including a plate separator having a plurality of parallel, sequential, flat separation channels bounded by separation plates and a feeding chamber communicating with lower ends of the separation channels and an outlet chamber communicating with top ends of the separation channels, whilst substance guide means joining the separation plates project transversely of the stream trajectory below the channels and increase the flow resistance in the direction of disposition of the channels the more so the nearer they are disposed to a feeding chamber, characterized in that all separation channels communicate by their lower ends with one and the same feeding chamber, in that all separation channels conduct mixture only in upward direction, in that all separation channels have substantially equal passages and in that the substance guide means and the angle between the separation plates on the one hand and a guide wall on the other hand are proportioned so that the quantity of flow in all separation channels is substantially the same.

FIG.1

FIG.2

0003146